# EUROPEAN PATENT APPLICATION

(11) **EP 2 265 006 A1**
(43) Date of publication of application: **22.12.2010**
(21) Application number: 09162897.4
(22) Date of filing: 17.06.2009
(51) Int. Cl.: H04N 5/74

(54) **Display apparatus for displaying information to a person**

(71) Applicant: Koninklijke Philips Electronics N.V., 5621 BA Eindhoven (NL)
(72) Inventor: The designation of the inventor has not yet been filed
(74) Representative: Golla-Franz, Anke Lucia

(57) **Abstract**

The invention relates to a display apparatus for displaying information to a person (2). The display apparatus (1) comprises a viewing direction detection unit (3) for detecting a viewing direction (4) of the person (2), a display unit (5) for displaying the information in a display region (6), and a control unit (7) for controlling the display unit (5) depending on the detected viewing direction (4) such that the detected viewing direction (4) points to the display region (6). This allows the person to adopt or maintain a comfortable posture in which the person can still look at the displayed information. A person can therefore still look at the displayed information, even if the mobility of the person is restricted, for example, if the person lies in a bed in a hospital, in particular, after a surgical operation.

## Description

### FIELD OF THE INVENTION

The invention relates to a display apparatus and a display method for displaying information to a person. The invention relates further to a corresponding computer program.

### BACKGROUND OF THE INVENTION

In general, a posture of a person needed for looking at displayed information is defined by the location of the display showing the information and the location of the person. However, this defined posture might be uncomfortable to the person or it might be even impossible to adopt the defined posture, for example, because the mobility of the person is restricted. For instance, a restricted mobility can likely occur if the person lies in a bed in a hospital, in particular, after a surgical operation, wherein this restricted mobility might not allow the person to look at the displayed information.

### SUMMARY OF THE INVENTION

It is an object of the present invention to provide a display apparatus and a display method for displaying information to a person, wherein the comfort of looking at the displayed information is increased for the person. It is a further object of the present invention to provide a corresponding computer program.

In a first aspect of the present invention a display apparatus for displaying information to a person is presented, wherein the display apparatus comprises:
- a viewing direction detection unit for detecting a viewing direction of the person,
- a display unit for displaying the information in a display region,
- a control unit for controlling the display unit depending on the detected viewing direction such that the detected viewing direction points to the display region.

Since the viewing direction of the person is detected, wherein the control unit controls the display unit such that the detected viewing direction points to the display region, in which the information is displayed, the position of the display region can be adapted to the actual posture of the person. This allows the person to adopt or maintain a comfortable posture in which the person can still look at the displayed information. A person can therefore still look at the displayed information, even if the mobility of the person is restricted, for example, if the person lies in a bed in a hospital, in particular, after a surgical operation.

The display unit is preferentially a beamer for projecting the information on a wall or a screen, wherein the region on the wall or on the screen, in which the information is displayed, is regarded as being the display region. The beamer is preferentially adapted to rotate over an angle of 360 degrees. The beamer is preferentially adapted to project information at any angle.

The information, which is displayed in the display region, is preferentially an image or a movie showing the information.

The control of the display unit such that the detected viewing direction points to the display region could also be regarded as a control such that the display unit points towards the detected viewing direction.

The viewing direction detection unit can comprise an imaging unit for generating an image of the head of the person and a viewing direction determination unit for determining the viewing direction from the generated image.

This allows determining the viewing direction of the person unobtrusively. The imaging unit is, for example, a camera like an infrared camera or a camera using light of the visible spectrum.

It is further preferred that the viewing direction determination unit is adapted to determine the positions of the eyes in the generated image and to determine the viewing direction from the determined positions of the eyes. Preferentially, the viewing direction determination unit is adapted to determine the positions and preferentially the movement of the pupils in the generated image and to determine the viewing direction from the determined positions and/or movements of the pupils.

The viewing direction is preferentially determined from the generated image by using known gaze tracking software, for example, the product IVIEW X from SensoMotoric Instruments can be used for determining the viewing direction.

The viewing direction can also be determined from a generated image by identifying a head pose and movement and by deriving the viewing direction from the identified head pose and movement. This can also be performed for determining different viewing directions of different persons.

It is further preferred that the imaging unit is adapted to generate a temperature image of the head of the person, wherein the viewing direction determination unit is adapted to determine the direction of a flow of particles being warmer than the surrounding in the generated temperature image and to determine the viewing direction from the determined direction of the flow of particles.

The flow of particles being warmer than the surrounding indicates the breathing direction. Since the breathing direction is similar to the viewing direction, by determining the direction of a flow of particles, i.e. by determining the breathing direction, the viewing direction can be determined. In order to determine the direction of a flow of particles being warmer than the surrounding, the imaging unit is preferentially an infrared camera.

The direction of the flow of particles being warmer than the surrounding can be determined by known breath flow determination algorithms, which identify the smallest part of a moving air funnel.

It is further preferred that the display apparatus comprises an attachment element for being attached to the head of the person, wherein the attachment element is detectable in the generated image, wherein the viewing direction determination unit is adapted to detect the attachment element in the generated image and to determine the viewing direction from the detected attachment element.

Preferentially, the display apparatus comprises one or more attachment elements, wherein the viewing direction determination unit is adapted to detect the attachment elements in the generated image and to determine the viewing direction from the one or more detected attachment elements. The one or more attachment elements are preferentially shaped such that the position and orientation of the one or more attachment elements can be determined from the position, preferentially orientation and preferentially shape of the one or more attachment elements detectable in the generated image. For example, the one or more attachment elements are preferentially asymmetric with respect to at least one axis. The one or more attachment elements are preferentially attached to the head of the person at known positions such that by knowing the position and preferentially orientation of the one or more attachment elements, the position and orientation of the head and, thus, the viewing direction can be determined. The viewing direction determination unit can, for example, be calibrated by detecting the position, preferentially orientation and preferentially shape of the one or more attachment elements in an image of the head, while the viewing direction is known. The resulting calibration data can be used for assigning a viewing direction to the detected position, preferentially orientation and preferentially shape of the one or more attachment elements, if they are detected during an actual determination of the viewing direction.

It is further preferred that the viewing direction detection unit comprises an acoustic sensing unit for generating a sensing signal being indicative of the acoustical environment of the person and a viewing direction determination unit for detecting a breathing sound from the sensing signal, for determining a breathing direction from the breathing sound and for determining the viewing direction from the determined breathing direction.

This also allows determining the viewing direction unobtrusively.
The acoustic sensing unit is preferentially a microphone. The acoustic sensing unit can, for example, be integrated in a mattress, sheet or pillow of a bed, in which the person is lying, or the acoustic sensing unit can be located at another position in the environment of the person for sensing a signal being indicative of the acoustical environment of the person.

The determination of the breathing direction and the determination of the viewing direction from the breathing direction can be determined by means of existing algorithms for audio signal processing, in particular, by existing algorithms which determine the direction of the acoustic breathing signal by identifying the position of the highest volume point. Corresponding breathing sound detection software is, for example, DSSF3 provided by YMEC software, Yoshimasa Electronic Inc.

It is further preferred that the viewing direction detection unit comprises a pressure measurement unit, wherein the pressure measurement unit is adapted to allow the head of the person to lie on the pressure measurement unit for measuring a pressure pattern being indicative of the position and orientation of the head on the pressure measurement unit, wherein the viewing direction detection unit further comprises a viewing direction determination unit for determining the position and the orientation of the head of the person from the measured pressure pattern and for determining the viewing direction from the determined position and orientation of the head of the person.

The pressure measurement unit is preferentially an array of pressure sensors, which are preferentially positioned in a grid. The pressure sensors are, for example, piezoelectric pressure sensors. The pressure sensors can be integrated in the mattress, a bed sheet or a pillow. If the head of the person lies on the pressure measurement unit, a pressure sensor measuring a pressure being above a threshold indicating that the head is lying on the respective pressure sensor indicates that the head is located at the position of the respective pressure sensor. By measuring the pressures of the pressure sensors of the pressure measurement unit, it can therefore be determined, at which positions the head is lying and at which positions the head is not lying. The corresponding pressure pattern can be used to determine the position and orientation of the head and, thus, to determine the viewing direction of the person. For example, different pressure patterns can be determined for different known viewing directions of the person for calibrating the viewing direction determination unit. If during an actual determination of the viewing direction the pressure pattern has been measured, the calibration data resulting from the calibration can be used to assign a viewing direction to the measured actual pressure pattern.

It is further preferred that the viewing direction detection unit comprises a positioning sensor for being attached to the head of the person, wherein the positioning sensor is adapted to determine the position of the positioning sensor, wherein the viewing direction detection unit further comprises a viewing direction determination unit for determining the position and orientation of the head from the determined position of the positioning sensor and for determining the viewing direction from the determined position and orientation of the head of the person.

Preferentially, at least two positioning sensors are attached to the head of the person, wherein the positioning sensors are adapted to determine the relative position towards each other and gravity, wherein the position and orientation of the head is determined from the relative position towards each other and gravity. Preferentially, the positioning sensors are implemented in earrings.

The positing sensors are preferentially distance sensors that calculate the relative single ear distance to a base location, wherein the respective distances of the two ears to the base location are used for determining the position and orientation of the head and, thus, the viewing direction.

It is preferred that the display apparatus further comprises a field of view determination unit for determining a field of view of the person depending on the determined viewing direction, wherein the control unit is adapted to control the display unit depending on the determined field of view such that the display region is located within the determined field of view.

For example, the field of view can be determined by centrally arranging an opening angle within which the person can see something without moving the head around the determined viewing direction. The opening angle is, for example, defined by the aperture of the eyes and possible eye movements.

It is further preferred that the viewing direction detection unit is adapted to detect several viewing directions for several persons, wherein the field of view determination unit is adapted to determine several field of views of the persons depending on the determined several viewing directions, wherein the control unit is adapted to control the display unit depending on the determined several field of views such that the display region is located within at least one of the several determined field of views and not located within at least one other of the several determined field of views.

This allows displaying information such that one or several persons can see the information, wherein one or several other persons cannot see this information and are not disturbed by this information.

It is further preferred that the display unit and the control unit are adapted such that the information is displayed undistorted to the person in the display region.

It is preferred that the display apparatus further comprises a shape providing unit for providing a shape of the display region, wherein the display unit and the control unit are adapted such that the information is displayed geometrically undistorted to the person in the display region depending on the provided shape of the display region and on the determined viewing direction.

For example, if the display unit comprises a beamer, which can be directed to different regions within a room in order to position the display region such that the determined viewing direction points to the display region, the angle under which the beam of the display unit meets a wall of the room changes, which would lead to geometric distortions. By controlling the display unit such that the information is displayed geometrically undistorted to the person in the display region depending on the provided shape of the display region and on the determined viewing direction, the information is displayed to the person as if it is being projected in a straight line with the user's viewing direction.

If it is known that the shape of the display region will be plane, because, for example, the display region will only be located on the same wall of a room in which the person is located, the shape providing unit only provides that the display region has a planar surface and this information is preferentially used by the display unit and the control unit to correct for geometrical distortions. However, the shape providing unit can also provide the information that the display region has a non-planar shape, for example, if the display region covers a corner of a room. The term "shape" also includes the orientation of the display region, i.e. the orientation of the surface on which the information is displayed. For example, if the information is firstly displayed on a first wall and then on a second wall, wherein these walls have an angular relationship with respect to each other of 90 degrees, this orientation information is also provided by the shape providing unit.

The shape providing unit can, for example, be a storing unit, in which the shape including the orientation of possible surfaces, on which the display region can be located, are stored, wherein for controlling the display unit the shape of the surface, on which the information is actually displayed, is retrieved from the storing unit for geometrically undistorting the display region.

The control unit is, for example, adapted to define an imaginary image plane within the determined field of view of the person such that the information in the imaginary image plane would be shown geometrically undistorted to the person The control unit controls then the display unit such that the rays reflected from the display region pass the imaginary image plane such that the person sees the geometrically undistorted image in the image claim. This will be explained in more detail further below.

The shape providing unit can also be any other unit which provides the shape of the display region. For example, distance sensors can be used for scanning the display region and for determining a profile of the distance region for determining its shape. Also an imaging unit can be used for generating an image of the display region, wherein the shape of the display region can be determined from shadows seen in the generated image of the display region. For example, for calibration different shadows can be detected in different generated images, which have been generated from different shapes of the display region, wherein the resulting calibration data can be used for determining the shape of the display region based on detected shadows in an actually generated image of the display region.

It is preferred that the display apparatus further comprises a color distribution providing unit for providing a color distribution of the display region, wherein the display unit and the control unit are adapted such that the information is displayed photometrically undistorted to the person in the display region depending on the provided color distribution of the display region.

This allows displaying the information to the person in original colors, i.e. in undistorted colors, even if the information is displayed in a colored display region, for example, if the information is projected on a colored wall. Since the color distribution within the display region is provided by the color distribution providing unit, the control unit can control the display unit such that the radiation projected on the display region has wavelengths, which are chosen such that the person sees the desired colors. The color distribution providing unit is, for example, a storing unit, in which the color distribution of different possible display regions are stored, wherein, if the display region is positioned at a certain location, for example, within a room, the color distribution of this location is retrieved from the storing unit for controlling the display unit such that the person sees the desired colors, i.e. such that the information is shown in the display region photometrically undistorted.

The color distribution providing unit can also be an image generation unit generating a color image of the display region, wherein this color image shows the color distribution of the display region, which can be used by the control unit for controlling the display unit such that the information is displayed photometrically undistorted to the person in the display region.

It is preferred that the display apparatus further comprises an awake determination unit for determining whether the person is awake, wherein the control unit is adapted to control the display unit such that the information is displayed, if the awake determination unit detects that the person is awake.

This allows showing the information only if the person is able to look at the information, i.e. only if the person is awake.

The awake determination unit comprises, for example, an imaging unit for imaging the person, wherein movements of the person or an opening of the eyes are detected in the generated image and wherein, if, for example, an opening of the eyes is detected, it is detected that the person is awake. In another embodiment, an acti-watch can be worn as wrist band that detects movements of the person during sleep, wherein the detected movements can be used for determining whether the person is awake, in particular, at night.

It is further preferred that the viewing direction detection unit is adapted to detect several viewing directions for several persons, wherein the display apparatus further comprises an averaging unit for determining an average viewing direction by averaging the determined several viewing directions, wherein the control unit is adapted to control the display unit depending on the average viewing direction such that the determined average viewing direction points to the display region.

This allows displaying the information such that the postures of several persons looking simultaneously at the information, are as comfortable as possible.

In a further aspect of the present invention a display method for displaying information to a person is presented, wherein the display method comprises the steps of:
- detecting a viewing direction of the person by a viewing direction detection unit,
- controlling a display unit for displaying the information in a display region depending on the detected viewing direction such that the detected viewing direction points to the display region by a control unit.

It is further preferred that the computer program comprising program code means for causing a display apparatus as defined in claim 1 to carry out the steps of the display method as defined in claim 14, when the computer program is run on a computer controlling the display apparatus.

It shall be understood that the display apparatus of claim 1, the display method of claim 14, and the computer programs of claim 15 have similar and/or identical preferred embodiments as defined in the dependent claims.

It shall be understood that a preferred embodiment of the invention can also be any combination of the dependent claims with the respective independent claim.

### BRIEF DESCRIPTION OF THE DRAWINGS

These and other aspects of the invention will be apparent from and elucidated with reference to the embodiments described hereinafter. In the following drawings:
- Figs. 1-3: show schematically and exemplarily embodiments of a display apparatus for displaying information to a person,
- Fig. 4: shows schematically and exemplarily a pressure measurement unit,
- Fig. 5: shows schematically and exemplarily a further embodiment of a display apparatus for displaying information to a person,
- Fig. 6: shows schematically and exemplarily an arrangement of a display unit, a display region and a person, and
- Fig. 7: shows a flowchart exemplarily illustrating a display method for displaying information to a person.

### DETAILED DESCRIPTION OF EMBODIMENT

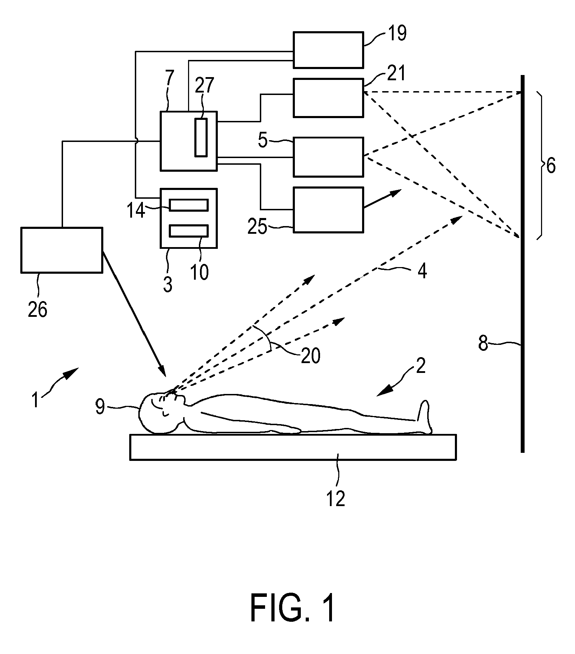

Fig. 1 shows schematically and exemplarily an embodiment of a display apparatus for displaying information to a person. The display apparatus 1 comprises a viewing direction detection unit 3 for detecting a viewing direction 4 of a person 2. The display apparatus 1 further comprises a display unit 5 for displaying the information in a display region 6 and a control unit 7 for controlling the display unit 5 depending on the detected viewing direction 4 such that the detected viewing direction 4 points to the display region 6. The display unit 5 is a beamer for projecting the information on a wall of a room, in which a bed is located on which the person 2 is lying. This room is, for example, the room of a hospital. However, the display apparatus can also be used for mass consumers, for example, in a bedroom environment where the person is sleepy and in need of effortless interaction.

The beamer 5 is adapted to rotate over an angle of 360 degrees and is preferentially adapted to project information at any angle. The information, which is displayed in the display region 6 by the beamer 5, is preferentially an image or a movie showing the information.

The viewing direction detection unit 3 comprises an imaging unit 10 for generating an image of a head 9 of the person 2 and a viewing direction determination unit 14 for determining the viewing direction 4 from the generated image. The imaging unit 10 is a camera like an infrared camera or a camera using light of the visible spectrum. In particular, the viewing direction determination unit 14 is adapted to determine the positions of the eyes in the generated image and to determine the viewing direction 4 from the determined positions of the eyes. Preferentially, the viewing direction determination unit 14 is adapted to determine the positions and preferentially the movement of the pupils in the generated image and to determine the viewing direction 4 from the determined positions and/or movements of the pupils.

In another embodiment, the imaging unit can be adapted to generate a temperature image of the head 9 of the person, wherein the viewing direction determination unit is adapted to determine the direction of a flow of particles being warmer than the surrounding in the generated temperature image and to determine the viewing direction from the determined direction of the flow of particles.

The flow of particles being warmer than the surrounding indicates the breathing direction. Since the breathing direction is similar to the viewing direction, by determining the direction of the flow of particles, i.e. by determining the breathing direction, the viewing direction can be determined. In order to determine the direction of a flow of particles being warmer than the surrounding, the imaging unit is preferentially an infrared camera.

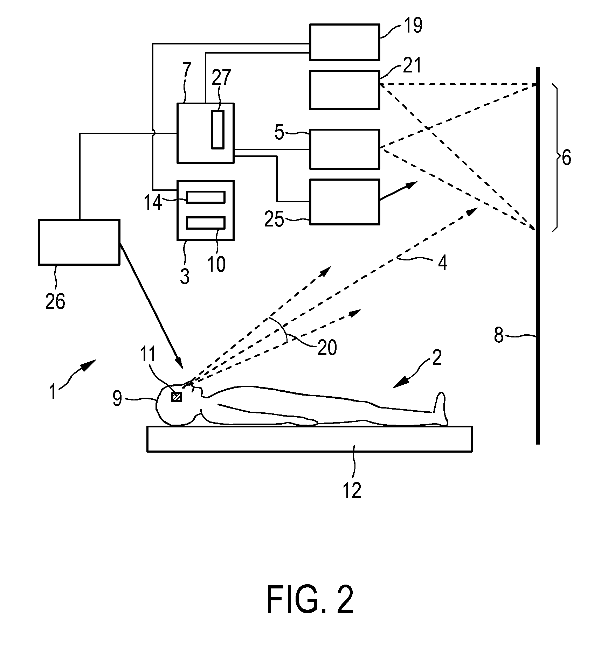

In an embodiment, which is schematically and exemplarily shown in Fig. 2, the display apparatus comprises an attachment element 11 for being attached to the head 9 of the person 2, wherein the attachment element 9 is detectable in the generated image and wherein the viewing direction determination unit is adapted to detect the attachment element 11 in the generated image and to determine the viewing direction 4 from the detected attachment element 11. In this embodiment, one or more attachment elements 11 are attached to the head 9 of the person 2, wherein the viewing direction determination unit is adapted to detect the attachment elements 11 in the generated image and to determine the viewing direction from the one or more detected attachment elements 11. The one or more attachment elements 11 are shaped such that the position and orientation of the one or more attachment elements 11 can be determined from the position, preferentially orientation and preferentially shape of the one or more attachment elements 11 detected in the generated image. The one or more attachment elements 11 are asymmetric with respect to at least one axis. The one or more attachment elements 11 are attached to the head 9 of the person 2 at known positions such that by knowing the position and preferentially orientation of the one or more attachment elements 11, the position and orientation of the head 9 and, thus, the viewing direction 4 can be determined. The viewing direction determination unit 14 is calibrated by detecting the position, preferentially orientation and preferentially shape of the one or more attachment elements 11 in an image of the head 9, while the viewing direction is known. The resulting calibration data are used for assigning a viewing direction 4 to the detected position, preferentially orientation and preferentially shape of the one or more attachment elements 11, if they are detected during an actual determination of the viewing direction 4.

In a further embodiment, in addition or alternatively, the viewing direction detection unit 3 comprises an acoustic sensing unit for generating a sensing signal being indicative of the acoustical environment of the person 2, wherein the viewing direction determination unit 14 is adapted to detect a breathing sound from the sensing signal, to determine a breathing direction from the breathing sound and to determine the viewing direction 4 from the determined breathing direction. The acoustic sensing unit is preferentially a microphone and can, for example, be integrated in a mattress 12, a sheet of a bed or a pillow. The acoustic sensing unit can also be located at another position in the environment of the person 2 for sensing a signal being indicative of the acoustical environment of the person 2.

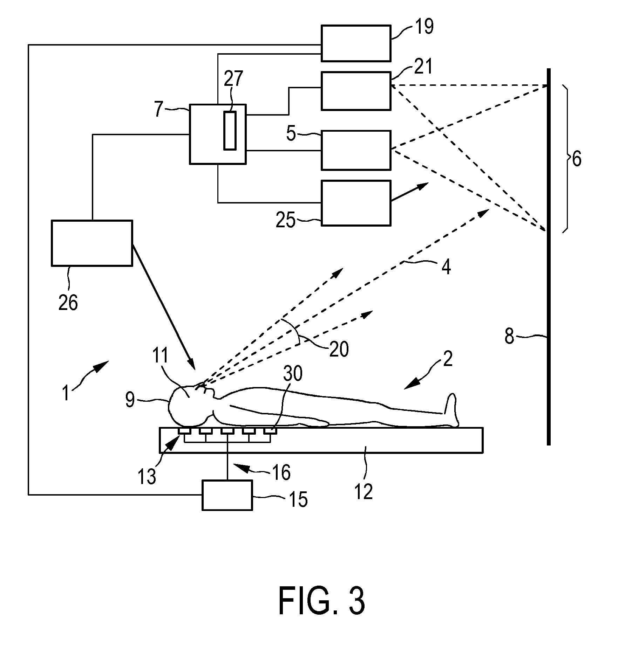

In a further embodiment, which is schematically and exemplarily shown in Fig. 3, a viewing direction detection unit 16 comprises a pressure measurement unit 13. The pressure measurement unit 13 is adapted to allow the head 9 of the person 2 to lie on the pressure measurement unit 13 for measuring a pressure pattern being indicative of the position and orientation of the head 9 on the pressure measurement unit 13. The viewing direction detection unit 16 further comprises a viewing direction determination unit 15 for determining the position and the orientation of the head 9 of the person 2 from the measured pressure pattern and for determining the viewing direction 4 from the determined position and orientation of the head 9 of the person 2.

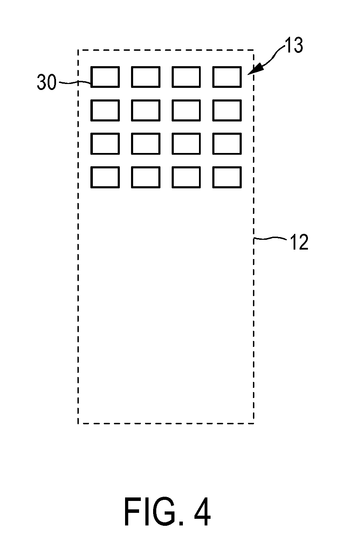

The pressure measurement unit 13 is an array of pressure sensors 30, which are positioned in a grid. The pressure sensors 30 are, in this embodiment, piezoelectric pressure sensors. The pressure sensors 30 are integrated in the mattress 12. However, the pressure sensors can also be integrated in other parts of the bed like the bed sheet or the pillow. The arrangement of the pressure sensors 30 in a grid is schematically and exemplarily shown in Fig. 4.

If the head 9 of the person 2 lies on the pressure measurement unit 13, a pressure sensor 30 measuring a pressure being above threshold indicating that the head 9 is lying on the respective pressure sensor indicates that the head 9 is located at the position of the respective pressure sensor 30. By measuring the pressures of the pressure sensors 30 of the pressure measurement unit 13, it can therefore be determined, at which positions the head 9 is lying and at which positions the head 9 is not lying. The corresponding pressure pattern is used to determine the position and orientation of the head 9 and, thus, to determine the viewing direction 4 of the person 2. For calibrating the viewing direction determination unit 15, different pressure patterns are determined for different known viewing directions of the person 2. If during an actual determination of the viewing direction the pressure pattern has been measured, the calibration data resulting from the calibration are used to assign a viewing direction 4 to the measured actual pressure pattern.

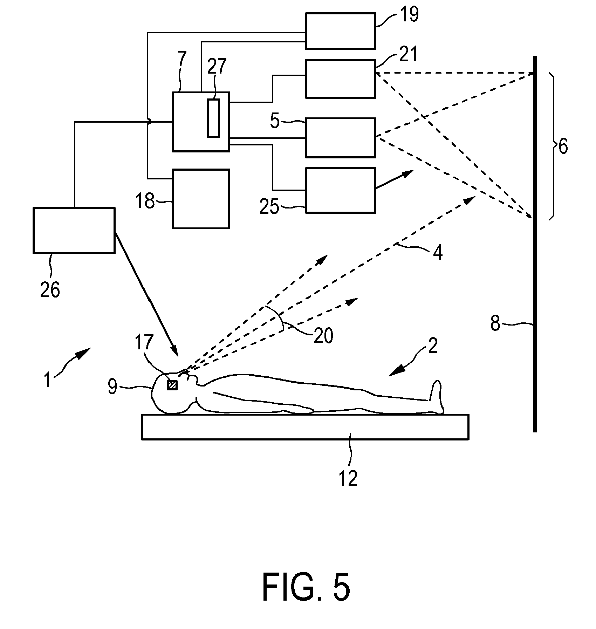

In a further embodiment, schematically and exemplarily shown in Fig. 5, the display apparatus comprises a viewing direction detection unit including a positioning sensor 17 for being attached to the head 9 of the person. The positioning sensor 17 is adapted to determine the position of the positioning sensor 17. The viewing direction detection unit further includes a viewing direction determination unit 18 for determining the position and orientation of the head 9 from the determined position of the positioning sensor 17 and for determining the viewing direction 4 from the determined position and orientation of the head 9 of the person 2. Preferentially, at least two positioning sensors 17 are attached to the head 9 of the person 2, wherein the positioning sensors 17 are adapted to determine the relative position towards each other and gravity and wherein the viewing direction determination unit 18 is adapted to determine the position and orientation of the head 9 from the relative position towards each other and clarity. The positioning sensors 17 are preferentially implemented in earrings.

The display apparatus 1 further comprises a field of viewing determination unit 19 for determining a field of view of the person 2 depending on the determined viewing direction, wherein the control unit 7 is adapted to control the display unit 5 depending on the determined field of view such that the display region 6 is located within the determined field of view. The field of view is determined by centrally arranging an opening angle 20 within which the person can see something without moving the head 9 around the determined viewing direction 4. The opening angle 20 is preferentially defined by the aperture of the eyes of the person 2 and possible eye movements. The opening angle 20 can be an angle which is stored in the field of view determination unit 19, wherein a field of the view is determined by retrieving the stored opening angle and by arranging the stored opening angle centrally around the determined viewing direction 4. The stored opening angle can, for example, be determined by measuring the opening angle of different persons and by storing these measured opening angles or by storing, for example, an average of these measured opening angles.

In an embodiment, if several persons are present in the same room, for example, in the same room of a hospital, the viewing direction detection unit is adapted to detect several viewing directions for several persons, wherein the field of view determination unit 19 is adapted to determine several field of views of the persons depending on the determined several viewing directions, i.e. for each viewing direction a corresponding field of view is determined. The control unit 7 is adapted to control the display unit 5 depending on the determined several field of views such that the display region 6 is located within at least one of the several determined field of views and not located within at least one other of the several determined field of views. For example, if two persons are present within the same room and a first person wants to look at the information and a second person does not want to be disturbed by this information, the information can be displayed in a display region, which is located within the field of view of the first person, but not within the field of view of the second person.

The display unit 5 and the control unit 7 are adapted such that the information is displayed undistorted to the person 2 in the display region 6.

The display apparatus 1 further comprises a shape providing unit 21 for providing a shape of the display region 6. The display unit 5 and the control unit 7 are adapted such that the information is displayed geometrically undistorted to the person 2 in the display region 6 depending on the provided shape of the display region 6 and on the determined viewing direction 4.

The display unit 5 is a beamer which can be directed to different regions within a room in order to position the display region 6 such that the determined viewing direction 4 points to the display region 6. If the viewing direction 4 and, thus, the position of the display region 6 changes, also the angle under which the beam of the display unit 5 meets the wall 8 of the room changes, which would lead to geometric distortions. By controlling the display unit 5 such that the information is displayed geometrically undistorted to the person 2 in the display region 6 depending on the provided shape of the display region 6 and on the determined viewing direction 4, the information is displayed to the person 2, as if it is being projected in a straight line with the user's viewing direction 4.

In the present embodiment, the shape of the display region 6 is generally plane, because the display region 6 will substantially only be located on the wall 8 of a room in which the person 2 is located. In this case, the shape providing unit 21 only provides that the display region 6 has a planar surface and this information is preferentially used by the display unit 5 and the control unit 7 to correct for geometrical distortions. However, if the display region 6 is always located on the same plane wall, the shape of the display region will always be the same and the shape providing unit can be omitted. In this case, the display unit 5 and the control unit 7 are preferentially adapted such that the information is displayed geometrically undistorted to the person in the display region depending on the determined viewing direction, the corresponding position of the display region and the position of the display unit.

The shape providing unit 21 can also provide the information that the display region 6 has a non-planar shape, for example, if the display region 6 covers a corner of a room. The term "shape" also includes the orientation of the display region 6, i.e. the orientation of the surface on which the information is displayed. For example, if the information is firstly displayed on a first wall of a room and then on a second wall of a room, wherein these walls have an angular relationship with respect to each other of 90 degrees, this orientation information is also provided by the shape providing unit and the display unit 5 and the control unit 7 can be adapted such that the information is shown schematically undistorted depending on the orientation of the wall on which the information is displayed and depending on the viewing direction 4, if it is assumed that the position of the display unit 5 is fixed and known and the direction of the beams projecting the information in the display region is defined by the viewing direction via the display region.

In this embodiment, the shape providing unit 21 comprises distance sensors for scanning the display region and for determining a profile of the display region for determining its shape. In other embodiments, the shape providing unit can comprise an imaging unit for generating an image of the display region, wherein the shape of the display region can be determined from shadows seen in the generated image of the display region. The shape providing unit can also be a storing unit, in which the shape including the orientation of possible surfaces, on which the display region can be located, are stored, wherein for controlling the display unit 5 the shape of the surface, on which the information is actually displayed, is retrieved from the storing unit for geometrically undistorting the displayed information.

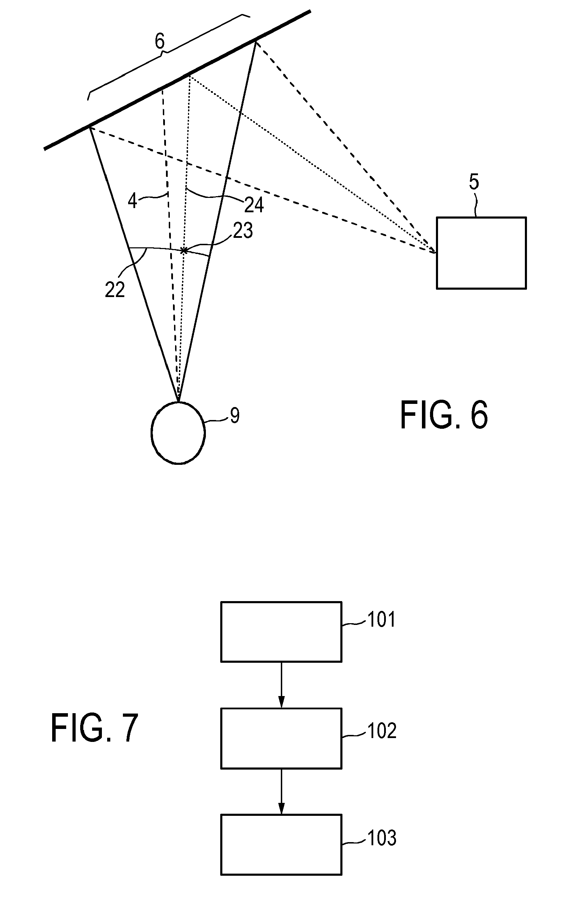

The undistortion process for geometrically undistorting the information is preferentially performed depending on the position of the display unit 5 relative to the position of the display region 6 and relative to the position of the head 9 of the person 2. Furthermore, the information can be undistorted depending on the orientation and preferentially shape of the display region 6, i.e. the region on which the information is displayed. In the following an undistortion process will be exemplarily described with reference to Fig. 6.

Fig. 6 shows a situation in which a person with a head 9 is looking at the display region 6, wherein information is displayed within the display region 6 by the display unit 5. An imaginary plane 22 is defined within the field of view of the person with the head 9. The imaginary plane 22 is positioned orthogonal to the determined viewing direction 4 of the person. The control unit 7 determines at which locations in the imaginary image plane 22, which visualization property has to be provided to the person in order to show the information to the person geometrically undistorted. For example, the control unit 7 determines at which location within the imaginary image plane 22 which color or intensity has to be provided to the person in order to show the information to the person schematically undistorted. The control unit 7 then controls the display unit 5 such that under consideration of the reflections at the display region 6, the display unit 5 provides the desired visualization properties at the corresponding locations in the imaginary image plane 22. For example, if the control unit 7 has determined that a certain visualization property has to be provided at the location 23 in the imaginary image plane 22, the control unit 7 controls the display unit 5 such that a ray 24 is emitted by the display unit 5 and reflected at the display region 6 such that the desired visualization property is present at the position 23 in the imaginary image plane 22.

The display apparatus 1 further comprises a color distribution providing unit 25 for providing a color distribution of the display region 6, wherein the display unit 5 and the control unit 7 are adapted such that the information is displayed photometrically undistorted to the person 2 in the display region 6 depending on the provided color distribution of the display region 6. For example, if the control unit has determined that in a certain position like the position 23 in the imaginary image plane 22 a certain color has to be provided to the person, in order to show the information photometrically undistorted, the control unit 7 controls the display unit 5 such that under consideration of the orientation and shape of the display region 6 and under consideration of the color distribution in the display region 6 the corresponding ray 24 has a wavelength, which provides the desired color at the respective position 23 in the imaginary image plane 22, after the ray 24 has been reflected at the display region 6.

The color distribution providing unit 25 is preferentially a storing unit in which the color distribution of different possible locations of the display region 6 are stored, wherein, if the display region 6 is positioned at a certain location, for example, within a room, the color distribution of this location is retrieved from the storing unit for controlling the display unit 5 such that the person sees the desired colors, i.e. such that the information is shown to the person 6 photometrically undistorted.

The color distribution providing unit 25 can also be an image generation unit generating a color image of the display region 6, wherein this color image shows the color distribution of the display region 6, which can be used by the control unit 7 for controlling the display unit 5 such that the information is displayed photometrically undistorted to the person 2 in the display region 6.

The display apparatus 1 further comprises an awake determination unit 26 for determining, whether the person 2 is awake, wherein the control unit 7 is adapted to control the display unit 5 such that the information is displayed, if the awake determination unit 26 detects that the person 2 is awake.

The viewing direction detection unit 3 can be adapted to determine several viewing directions for several persons, if several persons are present in the same room and if the several persons want to see the same information. The display apparatus 1 further comprises an averaging unit 27 for determining an average viewing direction by averaging the determined several viewing directions, wherein the control unit 7 is adapted to control the display unit 5 depending on the average viewing direction such that the determined average viewing direction points to the display region 6.

In the following an embodiment of a display method for displaying information to a person will be exemplarily described with reference to a flowchart shown in Fig. 7.

In step 101, a viewing direction 4 of the person 2 is detected by the viewing direction detection unit 3. In step 102, the control unit 7 determines how the information has to be displayed in order to being displayed undistorted to the person. In step 103, the control unit 7 controls the display unit 5 such that the determined viewing direction 4 points to the display region 6 and the information is shown undistorted to the person 2. In other embodiments, step 103 can be omitted, wherein then the control unit 7 controls the display unit 5 such that the determined viewing direction 4 points to the display region 6 without undistorting the display of the information.

The display apparatus allows projecting information in line with the user's, viewing direction or gaze. The information is preferentially digital content which is projected in line with the user's gaze. The display apparatus promotes an intuitive and effortless interaction style suitable for, in particular, a bedroom environment.

Interacting with devices or systems in a bedroom context requires that they are intuitive and effortless. This restricts the possibility of looking at a display. That is, when people are lying in bed, it is uncomfortable to look at a display in front of their bed. Even if the display is connected to the ceiling, or the ceiling is used to project on, this requires that the user is looking upwards. However, this is not always desired, since the user might be too tired to turn and look at a fixed display. The display apparatus in accordance with the invention avoids that a user needs to turn or lift his/her head to look at a display by detecting the user's gaze and by projecting a display in accordance with the direction of the gaze.

The information is, for example, passive entertainment or active interaction.

Although in the above described embodiments, the display region is preferentially located on a wall, i.e. the information is preferentially projected on a wall, in other embodiments the information can also be projected on, for example, a person's skin, a ceiling, a curtain or on an existing display such as a picture frame or a television screen.

Although in the above described embodiments a beamer is preferentially used as a display unit, also another display unit can be used for displaying the information in the display region. For example, another projection unit can be used for projecting the information on a surface like the wall or ceiling of a room.

Although in the above described embodiments the display apparatus is preferentially used in a bedroom environment, the display apparatus can also be used outside a bedroom, in order to allow a person to look at information in a comfortable way. For example, the display apparatus can be adapted to be used in a car for showing a person information, in particular, on a windscreen of the car.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Determinations like the determination of a viewing direction or of a field of view performed by one or several units or devices can be performed by any other number of units or devices. For example, the determination of a viewing direction, the determination of a field of view and of a certain kind of displaying such that the information is shown undistorted to the person, can be performed by a single unit or by any other number of units. The determinations and/or the control of the display apparatus in accordance with the display method can be implemented as program code means of a computer program and/or as dedicated hardware.

A computer program may be stored/distributed on a suitable medium, such as an optical storage medium or a solid-state medium, supplied together with or as part of other hardware, but may also be distributed in other forms, such as via the Internet or other wired or wireless telecommunication systems.

Any reference signs in the claims should not be construed as limiting the scope.

## Claims

1. A display apparatus for displaying information to a person (2), the display apparatus (1) comprising:
- a viewing direction detection unit (3; 16; 17, 18) for detecting a viewing direction (4) of the person (2),
- a display unit (5) for displaying the information in a display region (6),
- a control unit (7) for controlling the display unit (5) depending on the detected viewing direction (4) such that the detected viewing direction (4) points to the display region (6).

2. The display apparatus as defined in claim 1, wherein the viewing direction detection unit (3) comprises an imaging unit (10) for generating an image of the head (9) of the person (2) and a viewing direction determination unit (14) for determining the viewing direction (4) from the generated image.

3. The display apparatus as defined in claim 2, wherein the viewing direction determination unit (14) is adapted to determine the positions of the eyes in the generated image and to determine the viewing direction from the determined positions of the eyes.

4. The display apparatus as defined in claim 1, wherein the viewing direction detection unit comprises an acoustic sensing unit for generating a sensing signal being indicative of the acoustical environment of the person (2) and a viewing direction determination unit for detecting a breathing sound from the sensing signal, for determining a breathing direction from the breathing sound and for determining the viewing direction from the determined breathing direction.

5. The display apparatus as defined in claim 1, wherein the viewing direction detection unit (16) comprises a pressure measurement unit (13), the pressure measurement unit (13) being adapted to allow the head (9) of the person (2) to lie on the pressure measurement unit (13) for measuring a pressure pattern being indicative of the position and orientation of the head on the pressure measurement unit (13), wherein the viewing direction detection unit (16) further comprises a viewing direction determination unit (15) for to determining the position and the orientation of the head (9) of the person (2) from the measured pressure pattern and for determining the viewing direction from the determined position and orientation of the head (9) of the person (2).

6. The display apparatus as defined in claim 1, wherein the viewing direction detection unit (17, 18) comprises a positioning sensor (17) for being attached to the head (9) of the person (2), wherein the positioning sensor (17) is adapted to determine the position of the positioning sensor (17), wherein the viewing direction detection unit (17, 18) further comprises a viewing direction determination unit (18) for determining the position and orientation of the head (9) from the determined position of the positioning sensor (17) and for determining the viewing direction from the determined position and orientation of the head (9) of the person (2).

7. The display apparatus as defined in claim 1, wherein the display apparatus further comprises a field of view determination unit (19) for determining a field of view of the person (2) depending on the determined viewing direction, wherein the control unit (7) is adapted to control the display unit (5) depending on the determined field of view such that the display region (6) is located within the determined field of view.

8. The display apparatus as defined in claim 7, wherein the viewing direction detection unit is adapted to detect several viewing directions for several persons, wherein the field of view determination unit (19) is adapted to determine several field of views of the persons depending on the determined several viewing directions, wherein the control unit (7) is adapted to control the display unit (5) depending on the determined several field of views such that the display region (6) is located within at least one of the several determined field of views and not located within at least one other of the several determined field of views.

9. The display apparatus as defined in claim 1, wherein the display unit (5) and the control unit (7) are adapted such that the information is displayed undistorted to the person in the display region (6).

10. The display apparatus as defined in claim 9, wherein the display apparatus (1) further comprises a shape providing unit (21) for providing a shape of the display region, wherein the display unit (5) and the control unit (7) are adapted such that the information is displayed geometrically undistorted to the person in the display region (6) depending on the provided shape of the display region (6) and on the determined viewing direction (4).

11. The display apparatus as defined in claim 9, wherein the display apparatus (1) further comprises a color distribution providing unit (25) for providing a color distribution of the display region (6), wherein the display unit (5) and the control unit (7) are adapted such that the information is displayed photometrically undistorted to the person (2) in the display region (6) depending on the provided color distribution of the display region.

12. The display apparatus as defined in claim 1, wherein the display apparatus (1) further comprises an awake determination unit (26) for determining whether the person (2) is awake, wherein the control unit (7) is adapted to control the display unit (5) such that the information is displayed, if the awake determination unit (26) detects that the person (2) is awake.

13. The display apparatus as defined in claim 1, wherein the viewing direction detection unit (16) is adapted to detect several viewing directions for several persons, wherein the display apparatus (1) further comprises an averaging unit (27) for determining an average viewing direction by averaging the determined several viewing directions, wherein the control unit (7) is adapted to control the display unit (5) depending on the average viewing direction such that the determined average viewing direction points to the display region (6).

14. A display method for displaying information to a person, the display method comprising the steps of:
- detecting a viewing direction of the person (2) by a viewing direction detection unit (16),
- controlling a display unit (5) for displaying the information in a display region (6) depending on the detected viewing direction such that the detected viewing direction points to the display region (6) by a control unit (7).

15. A computer program for displaying information to a person, the computer program comprising program code means for causing a display apparatus (1) as defined in claim 1 to carry out the steps of the display method as defined in claim 14 when the computer program is run on a computer controlling the display apparatus (1).
